Europäisches Patentamt

(19) European Patent Office

Office européen des brevets

(11) Publication number: 0 142 047
A2

# (12) EUROPEAN PATENT APPLICATION

(21) Application number: 84112325.0

(22) Date of filing: 12.10.84

(51) Int. Cl.⁴: B 60 C 21/08

(30) Priority: 09.11.83 US 550281

(43) Date of publication of application:
22.05.85 Bulletin 85/21

(84) Designated Contracting States:
BE DE FR GB IT LU SE

(71) Applicant: THE FIRESTONE TIRE & RUBBER COMPANY
1200 Firestone Parkway
Akron, Ohio 44317(US)

(72) Inventor: Bohm, Georg G.A.
1212 Sunset View Drive
Akron Ohio 44313(US)

(72) Inventor: DeTrano, Mario
7549 Celina Street N.W.
Massillon Ohio 44646(US)

(74) Representative: Kraus, Walter, Dr. et al,
Patentanwälte Kraus Weisert & Partner
Thomas-Wimmer-Ring 15
D-8000 München 22(DE)

(54) EPDM-based sealant compositions and puncture-sealing tires containing the same.

(57) A tubeless tire is provided with a puncture-sealing layer comprising a cured composition formed from EPDM, at least about 550 polybutene having a number average molecular weight ranging from about 500 to about 5000, and a curing system.

EP 0 142 047 A2

Croydon Printing Company Ltd.

## EPDM-BASED SEALANT COMPOSITIONS AND
## PUNCTURE-SEALING TIRES CONTAINING THE SAME

### Technical Field

This invention relates to tire sealant compositions. It also relates to self-sealing tubeless tires wherein the tire is provided with a puncture sealing layer comprised of such composition.

### Background Of The Invention

The concept of self-sealing pneumatic tires has been known for decades. Typically these have a layer of tire sealant composition on the inner surface of the tire behind the tread which is intended to adhere to a puncturing object and to fuse together to fill and close the opening left when the puncturing object comes out or is removed. Ideally, the composition making up this layer should be such (a) that the layer is a permanent part of the tire and does not migrate during tire use (e.g. to accumulate at the crown of the inner surface leaving the surface under the tread marginal portions unprotected), (b) that it is tacky enough to adhere firmly to a puncturing object and to fuse to entirely fill the opening left by the puncturing object, and (c) that it is cohesive and strong enough to resist "blow through" by action of pressurized air on the sealing layer back of a sealed puncture opening. However, there has been a problem in fulfilling all these attributes since increasing tackiness of a composition to increase the probability of adhering and sealing often also increases probability of migration whereby a portion of the tire becomes unprotected. It has been observed, however, that increasing the cohesive strength of a sealant composition to reduce migration and resist blow through often also reduces the ability of the composition to remain adhered to a puncturing object and to self-heal (that is, fuse together) when the object is removed. Therefore, a careful balance of viscous and elastic compounds is needed in a tire sealant composition to provide satisfactory performance.

Ornum et al. U.S. 4,113,799 is directed to a self-healing carbon reinforced butyl rubber based sealant in admixture with a tackifier which may be polybutylene. This is limited to a butyl rubber base and sacrifices same adhering properties.

Consideration has been given to puncture-sealing tires with EPDM-based sealant. Okado et al. U.S. 3,952,787 discloses a tire with an EPR or EPDM-based sealant including 50-500 parts polybutene per hundred parts EPR or EPDM and an inorganic filler. This composition is limited to its adherence properties by the 500 parts by weight upper limit on polybutene. Honda et al. U.S. 4,090,546 discloses a puncture-sealing tire with EPDM-based sealant containing from about 185 to 1900 parts of polybutene tackifying agent (i.e. to obtain benefits of greater adhesion to puncturing objects) but requires inclusion of white carbon to increase the viscosity (i.e. to minimize migration).

## Summary Of The Invention

It has now been discovered that a puncture-sealing tire with an EPDM-based puncture sealing layer with relatively high amounts of polybutene tackifier can be formulated to obtain excellent adhesion (adherence) and resistance to migration properties without the need for viscosity increasing ingredients by providing a cured EPDM-polybutene composition.

Accordingly, the puncture-sealing tire of the invention herein is a tubeless tire provided on its inner surface, i.e. inside the tire either on its innermost surface or between the carcass and another layer, with a puncture-sealing layer consisting essentially of a cured composition formed from ingredients comprising

(a)    100 parts by weight ethylene-propylene-diene terpolymer elastomer,

(b)    at least about 550 parts by weight polybutene having a number average molecular weight ranging from about 500 to about 5000,

(c)    a curing system.

The puncture-sealing tire herein has a puncture-sealing layer which resists migration, provides a high degree of adhesion, and resists blow through.

The aforementioned cured composition can be produced independent of a tire and sold to tire manufacturers for use in the manufacture of puncture-sealing tires.

Moreover, the aforementioned ingredients can be sold in the form of a sealant system to tire manufacturers who use the system to produce said cured composition.

Accordingly, the invention herein includes not only the puncture-sealing tire, but also the cured sealant composition, the sealant system for use in providing the cured composition, and the puncture-sealing layer formed of the cured composition.

The term "phr" as used hereinafter means parts by weight per hundred parts by weight of ethylene-propylene-diene terpolymer elastomer.

## Detailed Description

The ethylene-propylene-diene terpolymer elastomer (sometimes referred to herein as EPDM) used in this invention is a terpolymer of ethylene, propylene and a non-conjugated diene. It normally is composed of 40 to 80% by mole of ethylene, 60 to 20% by mole of propylene and 0.3 to 10% by mole diene. Suitable dienes include, for example, 5-ethylidene-2-norbornene, 5-methylene-2-norbornene, 2-alkylnorbonadiene, dicyclopentadiene, cyclooctadiene, 1,4-hexadiene, and 4,7,8,9-tetrahydroindene. EPDM is readily manufactured utilizing a coordination catalyst of the Ziegler-Natta type. A very suitable EPDM is available under the trademark EPsyn-55 from Copolymer Rubber & Chemical and is indicated by the manufacturer to have ethylidene norbornene as the diene, a Mooney viscosity (ML 1+4) at 125°C. of 55 and a specific gravity of 0.86.

The polybutene preferably has a number average molecular weight exceeding about 1000 as this has an effect on minimizing the possibility of migration, i.e. further increasing resistance to migration. While it is utilized in an amount of at least about 550 phr, typically it is utilized in an amount ranging from about 550 to about 900 phr.

It is preferably prepared by polymerizing an isobutylene rich stream with a metal halide catalyst and preferably has a polymer backbone structure resembling polyisobutylene. Very suitable polybutenes are available under the trademark Indopol, e.g. Indopol H-300 and Indopol H-1900, from Amoco. The manufacturer indicates that these Indopols have a polymer backbone structure resembling isobutylene and that Indopol H-300 has a viscosity (ASTM D-445) ranging from about 627 to 675 centistokes at 100°F. (ASTM D-445) and Indopol H-1900 has a viscosity ranging from 4069 to 4382 centistokes at 100°F. (ASTM D-445). The number average molecular weights ($\overline{Mn}$) of these materials are about 1290 and 2300, respectively, as determined by vapor pressure osmometry.

The curing system can be an accelerated sulfur system or a peroxide-catalyzed quinoid-type system. It is ordinarily used on a carrier-free basis in amounts ranging from about 1 to about 15 phr (parts by weight per hundred parts by weight EPDM) and on a carrier-containing basis in amounts ranging from about 1 to about 50 phr.

We turn firstly to the sulfur curing system. The system can be, for example, any of those typically utilized for accelerated rubber cures. Suitable accelerators include, for example, tetramethylthiuram disulfide, mercaptobenzothiazole and cadmium, zinc, or tellurium diethyldithiocarbamate.

We turn now to the peroxide-catalyzed quinoid-type systems. These ordinarily comprise from about 0.05 to about 5 phr of a quinone, from about 0.1 to about 10 phr of peroxide and from 0 to about 10 phr accelerator. Suitable quinones include, for example, p,p-di-benzoylquinonedioxime, dibenzoyl-p-quinonedioxime, and p-benzoquinonedioxime. Quinones useful herein include, for example, the list disclosed at column 3, lines 13-47 of Smith U.S. 2,879,823 which is herein incorporated by reference. Suitable peroxides include, for example: diacyl peroxides, e.g. dibenzoyl peroxide (known as benzoyl peroxide), 2,4-dichlorobenzoyl peroxide and lauroyl peroxide; ketone peroxides; peroxy esters, e.g. t-butyl perbenzoate and t-butyl peroxyacetate; dialkyl peroxides; hydroperoxides; and peroxy ketals. Peroxides useful herein include, for example, the list disclosed at column 2, lines 18-31 of Straub U.S. 3,531,455 which is herein incorporated by reference. Suitable accelerators include, for example: alcohols, e.g. octanol, butanediols, 4-methylcyclohexanol, t-amyl alcohol, and benzyl alcohol; ketones, e.g. cyclohexanone and acetophenone; aldehydes; sulfoxides, e.g. dimethylsulfoxide; carboxylic acids, e.g. acetic acid; esters, e.g. diethyl succinate; nitriles, e.g. benzonitrile; and amides, e.g. dimethyl formamide. Very advantageous peroxide catalyzed quinoid-type systems are disclosed in the application of DeTrano et al. titled "Accelerator System for Peroxide Based Curing Systems" filed concurrently herewith. A very good peroxide-catalyzed quinoid-type system comprises p-benzoquinonedioxime, benzoyl peroxide, and n-octanol. Benzoyl peroxide is available, for example, from Lucidol Chemicals under the tradename Luperco AA in the form of 33% benzoyl peroxide on a wheat starch base.

We turn now to optional ingredients useful in formulating the sealing layer.

The optional ingredients include reinforcing filler. Such is ordinarily used in the present invention at a level ranging from about 1 to about 25 phr. Suitable reinforcing fillers include, for example, carbon black, calcium and magnesium carbonates, silica, and zinc oxide. These fillers typically increase viscosity and therefore have an effect on minimizing the possibility of migration.

Optional ingredients also include auxiliary tackifying agent. Such is ordinarily used in the present invention at a level ranging from about 2 to about 25 phr. The auxiliary tackifying agent is different from and supplements the essential polybutene ingredient which has a number average molecular weight ranging from about 500 to about 5000. Inclusion of auxiliary tackifier further increases adhesion to metal (e.g. to the puncturing object). When the essential polybutene ingredient is one which has polymer backbone structure resembling polyisobutylene, a very useful auxiliary tackifying agent comprises linear aliphatic polyolefin (such is sold for example, by Hercules under the trademark Piccotac B-BHT and is linear aliphatic $C_4$-$C_6$ polyolefin having a 100°C. softening point--the BHT means that it includes the antioxidant butylated hydroxytoluene). Other auxiliary tackifying agents which can supplement the essential polybutene ingredient herein include, for example, triethylene glycol esters of hydrogenated rosins, vinyl toluene copolymers, alkyl aromatics, coumarone-indene resins, and polybutenes having number average molecular weights outside the aforespecified range of about 500 to about 5000.

Optional ingredients also include from about 0.05 to about 0.5 phr of antioxidants. These are useful in protecting the sealant system especially the optional auxiliary tackifying agents mentioned above, especially the linear aliphatic polyolefins--butylated hydroxytoluene is very useful for this purpose and may be supplied as part of the tackifying agent composition as in the case of Luperco AA mentioned above. Antioxidants are also desirably included where an accelerated sulfur cure is utilized to prevent degradation caused by oxygen. Such antioxidants include, for example, diphenyl-p-phenylenediamine, phenyl-beta-naphthylamine, hydroquinone; and octadecyl-3-(3',5'-di-tert-butyl-4'-hydroxyphenyl) propionate.

The sealant material is readily prepared, for example, from EPDM, polybutene and a quinoid-type curing system by forming a masterbatch of EPDM, part of the polybutene, the filler (if any) and the quinone, then blending (e.g. solution blending) with a further portion of polybutene and then adding peroxide catalyst and accelerator, if any, and then curing. Part of the polybutene is readily added with the peroxide and accelerator as a carrier for these.

The ingredients can also, simply be mixed in bulk.

The sealing layer is readily applied to the tire in a number of ways. Examples of these are as follows: The cure package is mixed with the main composition, for example, in a static mixer prior to extrusion onto the inner surface of the finished tire. Optionally, the composition may undergo additional curing at elevated temperatures. Another application method involves compounding all the ingredients including the curing system, forming these into a sheet, building the sheet into the green tire during tire building, and then curing in the mold. Still a further application method involves compounding all the ingredients, forming them into a sheet, curing, then pressing the cured sheeted material against the tire wall to permanently fix it in place.

The puncture-sealing layer is readily positioned in a tire, for example, in any conventional location.  For example, it is readily positioned in a tire in the same locations as sealing layers are positioned in Figs. 1 and 2 of Stang et al. U.S. 3,935,893.

The invention is illustrated by the following specific examples:

Compositions were prepared as follows (parts are by weight):

|  | Example I | Example II |
|---|---|---|
| EPDM (EPsyn 55) | 15 | 15 |
| Polybutene (Indopol H-1900) | 85 | 50.5 |
| Polybutene (Indopol H-300) | – | 29 |
| Resin Tackifier (Piccotac B-BHT) | – | 5.5 |
| Carbon Black (N-326) | 5 | 5 |
| p-benzoquinonedioxime | 1 | 1 |
| Peroxide Catalyst consisting by weight of 50% Luperco AA, 17.3% n-octanol, and 32.7% Indopol H-300 | 14.4 | 14.4 |

These compositions were prepared as follows: A masterbatch of the EPDM, 5 parts of the Indopol H-1900, the carbon black and the p-benzoquinonedioxime was prepared a Brabender Plasticorder operating at 60°C. to 60 rpm.  The resultant mix was then worked on a two-roll mill.  The batch was then solution blended in hexane with the remainder of the polybutene and other tackifier (if any) and was subsequently stripped of solvent in a vacuum oven to produce a dried material.  The Peroxide Catalyst was then added to the dried material in the Brabender Plasticorder at 60 rpm with no external heat.  Samples were then oven cured at 80°C. for 15-30 minutes.

The above compositions were evaluated for their ability to adhere to a metal surface (as might be encountered in the tire by a puncturing nail). Using an Instron Tensile Tester fitted with fixtures designed for the test, the steel probe of the Tester was brought against the surface of a 0.18 inch thick sheet of sealant composition and held at predetermined loading for a specified time before being pulled away from the surface at the various rates as specified below. The energy expended in separating the probe from the sealant was measured and recorded. The data are reported below (wherein the separation rate is in terms of speed of the Instron crosshead and the separation energy is in joules, with greater adhesion being indicated by greater separation energy).

| | Separation Rate | | | | | |
| | 2 inches / minute | | | | 20 inches/ minute | |
| Compressive Load, lbs. ———> | .5 | 1 | 3 | 5 | 1 | 5 |
|---|---|---|---|---|---|---|
| Example I | .25 | .21 | .33 | .41 | .51 | 1.05 |
| Example II | .39 | .30 | .53 | .70 | .68 | 1.61 |

The above data indicates superior adhesion-to-metal characteristics and is significantly better than is obtained on testing of a commercially available sealant composition.

The aforementioned cured material is readily pressed against a tire inside wall to fix it in place to form a puncture-sealing tire with a puncture-sealing layer with excellent adherence properties and resistance to migration.

Similarly good results are obtained when an accelerated sulfur curing system is substituted in the composition of Examples I and II for the quinoid-type system used therein.

The compositions of Examples I and II also demonstrate excellent resistance to migration, puncture filling properties and resistance to blow through after filling and sealing.

While the foregoing describes certain preferred embodiments of the invention, modifications will be readily apparent to those skilled in the art. Thus, the scope of the invention is intended to be defined by the following claims.

WHAT IS CLAIMED IS:

1. A tubeless tire provided on its inner surface with a puncture sealing layer consisting essentially of a cured composition formed from ingredients comprising

(a) 100 parts by weight ethylene-propylene-diene terpolymer elastomer,

(b) at least about 550 parts by weight polybutene having a number average molecular weight ($\overline{Mn}$) ranging from about 500 to about 5000,

(c) a curing system.

2. A tire as recited in claim 1, wherein the polybutene is present in an amount ranging from about 550 to about 900 parts by weight and has a number average molecular weight exceeding about 1000.

3. A tire as recited in claim 2, wherein the curing system is present in an amount (carrier-free basis) ranging from about 1 to about 15 parts by weight and is an accelerated sulfur system or a peroxide-catalyzed quinoid-type system.

4. A tire as recited in claim 3, wherein the curing system is a peroxide-catalyst quinoid-type system and comprises from about 0.05 to about 5 phr of a quinone, from about 0.1 to about 10 phr of peroxide and from 0 to about 10 phr accelerator.

5. A tire as recited in claim 4, wherein the quinone is p-benzoquinonedioxime, the peroxide is benzoyl peroxide and the accelerator is n-octanol.

6. A tire as recited in claim 4, wherein said ingredients additionally comprise from about 1 to about 25 parts by weight reinforcing filler.

7. A tire as recited in claim 6, wherein the reinforcing filler comprises carbon black.

8. A tire as recited in claim 6, wherein said ingredients additionally comprise from about 2 to about 25 parts by weight auxiliary tackifying agent.

9. A tire as recited in claim 8, wherein the polybutene has a polymer backbone structure resembling polyisobutylene and said tackifying agent comprises linear aliphatic polyolefin.

10. A tire as recited in claim 9, wherein said ingredients additionally comprise from about 0.05 to about 0.5 parts by weight of antioxidant.

11. A tire as recited in claim 10, wherein the reinforcing filler comprises carbon black.

12. A tire as recited in claim 1, wherein the curing system is an accelerated sulfur system and said ingredients additionally comprise from about 0.05 to about 0.5 parts by weight of antioxidant.

13. A tire as recited in claim 7, wherein the diene in the ethylene-propylene-diene terpolymer elastomer is 5-ethylidene-2-norbornene, the quinone is p-benzoquinonedioxime, the peroxide is benzoyl peroxide and the accelerator is n-octanol.

14. A tire as recited in claim 10, wherein the diene in the ethylene-propylene-diene terpolymer elastomer is 5-ethylidene-2-norbornene, said tackifying agent is made up of $C_4$-$C_6$ polyolefins, the antioxidant is butylated hydroxytoluene, the reinforcing filler is carbon black, the quinone is p-benzoquinonedioxime, the peroxide is benzoyl peroxide and the accelerator is n-octanol.

15. A cured composition for use in providing a puncture sealing layer in a tubeless tire formed from ingredients comprising

(a) 100 parts by weight ethylene-propylene-diene terpolymer elastomer,

(b) at least about 550 parts by weight polybutene having a number average molecular weight ($\overline{Mn}$) ranging from about 500 to about 5000,

(c) a curing system.

16. A cured composition as recited in claim 15, wherein the polybutene is present in an amount ranging from about 550 to about 900 parts by weight and has a number average molecular weight exceeding about 1000 and wherein the curing system is present in an amount (carrier-free basis) ranging from about 1 to about 15 parts by weight and is an accelerated sulfur system or a peroxide-catalyzed quinoid-type system.

17. A cured composition as recited in claim 16, wherein the curing system is a peroxide-catalyst quinoid-type system and comprises from about 0.05 to about 5 phr of a quinone, from about 0.1 to about 10 phr of peroxide and from 0 to about 10 phr accelerator.

18. A cured composition as recited in claim 17, wherein said ingredients additionally comprise from about 1 to about 25 parts by weight reinforcing filler.

19. A cured composition as recited in claim 18, wherein the diene in the ethylene-propylene-diene terpolymer elastomer is 5-ethylidene-2-norbonene, the quinone is p-benzoquinonedioxime, the peroxide is benzoyl peroxide, the accelerator is n-octanol, and the reinforcing filler is carbon black.

20. A cured composition as recited in claim 18, wherein said ingredients additionally comprise from about 2 to about 25 parts by weight auxiliary tackifying agent and from about 0.05 to about 0.5 parts by weight antioxidant.

21. A cured composition as recited in claim 20, wherein the diene in the ethylene-propylene-diene terpolymer elastomer is 5-ethylidene-2-norbornene, said tackifying agent is made up of $C_4$-$C_6$ polyolefins, the antioxidant is butylated hydroxytoluene, the reinforcing filler is carbon black, the quinone is p-benzoquinonedioxime, the peroxide is benzoyl peroxide and the accelerator is n-octanol.

22. A sealant system for use in providing a puncture-sealing layer in a tubeless tire comprising

(a)  100 parts by weight ethylene-propylene-diene terpolymer elastomer,

(b)  at least about 550 parts by weight polybutene having a number average molecular weight ($\overline{Mn}$) ranging from about 500 to about 5000,

(c)  a curing system.

23. A sealant system as recited in claim 22, wherein the polybutene is present in an amount ranging from about 550 to about 900 parts by weight and has a number average molecular weight exceeding about 1000 and wherein the curing system is present in an amount (carrier-free basis) ranging from about 1 to about 15 parts by weight and is an accelerated sulfur system or a peroxide-catalyzed quinoid-type system.

24. A sealant system as recited in claim 23, wherein the curing system is a peroxide-catalyst quinoid-type system and comprises from about 0.05 to about 5 phr of a quinone, from about 0.1 to about 10 phr of peroxide and from 0 to about 10 phr accelerator.

25. A sealant system as recited in claim 24, additionally comprising from about 1 to about 25 parts by weight reinforcing filler.

26. A sealant system as recited in claim 25, wherein the diene in the ethylene-propylene-diene terpolymer elastomer is 5-ethylidene-2-norbornene, the quinone is p-benzoquinonedioxime, the peroxide is benzoyl peroxide, the accelerator is n-octanol, and the reinforcing filler is carbon black.

27. A sealant system as recited in claim 25, additionally comprising from about 2 to about 25 parts by weight auxiliary tackifying agent and from about 0.05 to about 0.5 parts by weight antioxidant.

28. A sealant system as recited in claim 27, wherein the diene in the ethylene-propylene-diene terpolymer elastomer is 5-ethylidene-2-norbornene, said tackifying agent is made up of $C_4$-$C_6$ polyolefins, the antioxidant is butylated hydroxytoluene, the reinforcing filler is carbon black, the quinone is p-benzoquinonedioxime, the peroxide is benzoyl peroxide and the accelerator is n-octanol

29. A puncture-sealing layer in a tire consisting essentially of a cured composition formed from ingredients comprising

    (a)  100 parts by weight ethylene-propylene-diene terpolymer elastomer,

    (b)  at least about 550 parts by weight polybutene having a number average molecular weight ($\overline{Mn}$) ranging from about 500 to about 5000,

    (c)  a curing system.